# EUROPEAN PATENT SPECIFICATION

(11) **EP 4 697 091 B1**
(45) Date of publication and mention of the grant of the patent: **30.09.2026**
(21) Application number: 24194063.4
(22) Date of filing: 12.08.2024
(51) Int. Cl.: G02F 1/35, G02F 1/01

(54) **ADAPTING OPTICAL PROPERTIES OF A CONTINUOUS BODY COMPRISING NONLINEAR OPTICAL MATERIAL TO LIGHT OF DIFFERENT WAVELENGTHS BY ADJUSTING A TEMPERATURE DISTRIBUTION IN THE CONTINUOUS BODY**
ANPASSEN OPTISCHER EIGENSCHAFTEN EINES DURCHGEHENDEN KÖRPERS MIT NICHTLINEAREM OPTISCHEM MATERIAL AN LICHT VERSCHIEDENER WELLENLÄNGEN DURCH ANPASSEN EINER TEMPERATURVERTEILUNG IN DEM DURCHGEHENDEN KÖRPER
ADAPTATION DES PROPRIÉTÉS OPTIQUES D'UN CORPS CONTINU COMPRENANT UN MATÉRIAU OPTIQUE NON LINÉAIRE À LA LUMIÈRE DE DIFFÉRENTES LONGUEURS D'ONDE PAR AJUSTEMENT DE LA RÉPARTITION DE TEMPÉRATURE DANS LE CORPS CONTINU

(43) Date of publication of application: 18.02.2026
(73) Proprietor: Max-Planck-Gesellschaft zur Förderung der Wissenschaften e.V., 80539 München (DE)
(72) Inventor: Meylahn, Dr. Fabian, 22143 Hamburg (DE)
(74) Representative: REHBERG HÜPPE + PARTNER

(56) References cited:
- US-A- 5 898 718
- US-A1- 2017 269 389
- US-A1- 2018 081 256
- US-A1- 2021 234 329

## Description

### TECHNICAL FIELD OF THE INVENTION

The invention relates to a method of adapting optical properties of a continuous body arranged in a resonator cavity and comprising a nonlinear optical material to light of two different wavelengths passing through the continuous body along an optical axis. More particularly, the present invention relates to a method comprising the features of the preamble of independent claim 1.

Further, the invention relates to an optical resonator comprising a resonator cavity extending along an optical axis, and a continuous body made of a nonlinear optical material arranged in the resonator cavity. More particularly, the present invention relates to an optical resonator comprising the features of the preamble of independent claim 7.

In order to achieve a high interaction between the optical fields of light of two different wavelengths in a nonlinear optical material, phase-matching of the optical fields is required. Further, if the nonlinear material is arranged in a resonator, this resonator is to be tuned to at least one of the different wavelengths, and preferably to both different wavelengths.

### PRIOR ART

US 5 898 718 A discloses a light emitting device comprising a nonlinear harmonic generator optical structure which receives light of a plurality of primary frequencies at an input end thereof and which emits light of a plurality of second frequencies that are harmonics of the primary frequencies at an output end thereof. The light emitting device further comprises at least two heat exchange means, each of which is adapted to exchange thermal energy between the heat exchange means and a section of the optical structure. The heat exchange means are structured to independently control the overall temperature of the sections of the optical structure along the length of the optical structure, and also to independently control the energy exchange applied to the individual sections. The heat exchange means are therefore structured to independently set and maintain upon command the sections of the optical structure at the appropriate overall temperature to generate light at a desired harmonic frequencies of one of said primary light frequencies, and to apply more heat near the input end than to the output end of each section to optimize the output power of the harmonic frequency generated by each section. Further, US 5 898 718 A discloses a method of obtaining and optimizing output light at a plurality of harmonic frequencies from the nonlinear optical structure. The method comprises introducing light of a plurality of primary frequencies into an input end of the optical structure; applying heat to a first section of the optical structure and modifying the application of heat to obtain output light at a desired first harmonic frequency, applying heat differentially along the length of the first section at a plurality of separate locations, with more heat being applied near the input end than near the output end of the first section of the optical structure to optimize the first desired harmonic light output. Further, the method comprises applying heat to a second section of that optical structure and modifying the application of heat to obtain output harmonic light at a desired second harmonic frequency, and applying heat differentially along the length of the second section of the optical structure, with more heat being applied near the input end than near the output end of the second section to optimize the output of harmonic light at the desired second frequency. The first and second desired harmonic lights are obtained simultaneously or sequentially one at a time. When the first and second desired harmonic lights are obtained simultaneously, said first and second segments are separated segments of the optical structure. The light emitting device disclosed in US 5 898 718 A comprises no resonator.

US 2017 / 0 269 389 A1 discloses an apparatus for generating electromagnetic radiation comprising a pump laser for generating electromagnetic continuous-wave pump radiation, and an optical parametric oscillator having a nonlinear optical crystal. The optical parametric oscillator is arranged in a beam path of the pump radiation; and the optical parametric oscillator generates signal radiation and idler radiation from the pump radiation. The nonlinear optical crystal is arranged in the resonator, and the resonator is resonant for the wavelength of the signal radiation or the idler radiation generated in the optical parametric oscillator. The nonlinear optical crystal of the optical parametric oscillator is arranged in a furnace with temperature stabilization. The wavelength of the signal radiation or the idler radiation generated in the optical parametric oscillator is tuned by way of selecting the temperature of the nonlinear optical crystal in the optical parametric oscillator. Further, the apparatus comprises a nonlinear optical device having a further nonlinear optical crystal. The nonlinear optical device is arranged in a beam path of at least one of the signal radiation and the idler radiation. The nonlinear optical device generates electromagnetic radiation from the signal radiation or the idler radiation at a frequency greater than a frequency of the signal radiation or the idler radiation. The nonlinear optical crystal of the nonlinear optical device is arranged in a furnace which heats the crystal in such a way that the crystal has a temperature gradient in the beam direction of the signal radiation or idler radiation. A controller is connected to the furnace and to a temperature sensor that is arranged to detect a temperature of the crystal of the optical parametric oscillator. The controller controls the temperature gradient of the crystal of the nonlinear optical device depending on the temperature of the crystal of the optical parametric oscillator. The nonlinear optical device has a resonator having a plurality of mirrors.

US 2018 / 0 081 256 A1 discloses a tunable monolithic cavity-based frequency converter pumped by a single-frequency laser, in which cavity resonances are achieved by independently changing the temperatures of different sections of a nonlinear crystal. The different sections include a periodically poled active section and one or more adjacent, non-poled side sections. The temperature of the active section is controlled for phase-matching, and the temperatures of the one or more side sections are controlled for the cavity resonance of at least a down-converted beam. Means for controlling the temperature are thin layer resistors made of a conductor deposited on a support in contact with the crystal.

US 2021 / 0 234 329 A1 discloses a device for generating laser radiation comprising a temperature-controlled optical setup including an optically nonlinear solid state medium arranged in a resonator and having an active region. The outgoing laser radiation is generated from a pump beam introduced into the optically nonlinear solid state medium. A first temperature actuator and a second temperature actuator are configured to independently adjust temperature values in the active region of the optically nonlinear solid state medium. The first temperature actuator is configured to regulate a length of the resonator by setting a first temperature value within a first portion of the active region. The second temperature actuator is configured to match phases of wavelengths generated by the outgoing laser radiation and phases of wavelengths of the pump beam radiation by setting a second temperature value within a second portion of the active region. US 2021 / 0 234 329 A1 further comprises a method of generating laser radiation using a temperature-controlled optical setup. The method comprises providing a resonator comprising an optically nonlinear solid state medium having an active region, introducing pump beam radiation into the optically nonlinear solid state medium of the resonator, generating outgoing wavelengths of laser radiation from the optically nonlinear solid state medium of the resonator, adjusting a resonator length by setting a first temperature value within a first section of an active region of the resonator, and matching phases of the generated wavelengths and wavelengths of the introduced pump beam radiation by setting a second temperature value within a second section of the active region of the resonator. The active region extends over the optically nonlinear solid state medium. The resonator may comprise a first resonator mirror and a second resonator mirror positioned on outer sides of opposite ends of the optically nonlinear solid state medium. The method may further comprise adjusting the resonator length by regulating a third temperature within a third section of the active region and a fourth temperature within a fourth section of the active region of the resonator.

### OBJECT OF THE INVENTION

If a temperature of a continuous body made of a nonlinear optical material is set to a first value in a first region to achieve optimal phase-matching, and if the temperature of the same continuous body is set to a second value in an adjacent or neighboring region of the continuous body for resonance in the resonator, a steep temperature gradient or temperature step is generated between the adjacent regions in the nonlinear optical material. This steep temperature gradient results in thermal stress which may potentially deform the wavefronts of the transmitted light or lead to mechanical damage to the nonlinear optical material, if the temperature difference and thus the thermal stress becomes too high. Further, a thermal insulation layer or air gap is needed between the adjacent regions so that no continuous mechanical support for the continuous body is possible.

Thus, there is a need of a method and an optical resonator overcoming these disadvantages.

### SOLUTION

The present invention provides a method of adapting optical properties of a continuous body arranged in a resonator cavity comprising the features of independent claim 1 and an optical resonator comprising the features of independent claim 7. Preferred embodiments of the method and the optical resonator are defined in the dependent claims.

### DESCRIPTION OF THE INVENTION

The present invention provides a method of adapting optical properties of a continuous body, that is arranged in a resonator cavity and made of a nonlinear optical material, to light of two different wavelengths passing through the continuous body along an optical axis. The continuous body is a solid body. The continuous body may be homogenous, i.e. comprise a homogenous or at least quasi-homogenous composition along the optical axis. Thus, the entire continuous body may be made of the nonlinear optical material, or of the nonlinear optical material and a further material which may have a same composition but not be nonlinear. For example, the nonlinear optical material may be a periodically poled nonlinear optical material. The nonlinear optical material will be a crystal. Particularly, the nonlinear optical material may be a periodically poled crystal. The continuous body has a total length along the optical axis.

In the method according to the present invention, a spatially constant temperature is adjusted in a first region of the continuous body. The first region comprises the nonlinear optical material and extends over at least 20 % of the total length of the continuous body. The feature that the first region in which the spatially constant temperature is adjusted extends over at least 20 % of the total length of the continuous body means that the first region extends over an essential part of the total length of the continuous body. Thus, the spatially constant temperature is constant over an essential part of the total length of the continuous body. Typically, the spatially constant temperature which is adjusted in the entire first region of the continuous body will also be temporarily constant, i.e. constant over periods of time over which the method according to the invention is implemented for a particular purpose, i. e. over which light is coupled out of the resonator cavity for a particular purpose.

Particularly, the spatially constant temperature that is adjusted in the first region of the continuous body will be selected such as to achieve phase-matching between the light of the two different wavelengths in the first region. Thus, the first region will be or include the region of maximum interaction between the light of the two different wavelengths within the resonator cavity. The light of the two different wavelengths may, for example, be light of a laser beam injected into the resonator cavity as pump light and light generated in the generator using the pump light but at a wavelength differing from the wavelength of the pump light. The light generated may form a further laser beam that can be coupled out of the resonator cavity. The frequency of the light generated may be a harmonic of the pump light, or the result of a sum or difference frequency generation and opto-parametric amplification or oscillation.

In the method according to the present invention, a first temperature gradient is adjusted in a second region of the continuous body. The second region neighbors the first region on a first side of the first region and extends over at least 10 % of the total length of the continuous body. Although the second region neighbors the first region, it may or it may not comprise the nonlinear optical material. For example, the second region may comprise a material of a same chemical composition as the nonlinear optical material in the first region but without periodical poling. The material of the second region may even have another composition than the nonlinear optical material in the first region. However, preferably, the second region comprises the same nonlinear optical material as the first region. The feature that the second region of the continuous body extends over at least 10 % of the total length of the continuous body indicates that the first temperature gradient is adjusted over a relevant part of the continuous body. This part of the continuous body covered by the second region along the optical axis may even be larger than the part of the continuous body covered by the first region along the optical axis. However, typically, the second region will not be larger and, often, it will be smaller than the first region. The first temperature gradient that is adjusted in the second region of the continuous body will be selected such as to achieve resonance of the light of the two different wavelengths in the resonator cavity.

Particularly, the first temperature gradient may be selected such as to contribute to a resonance of the light of both different wavelengths. The first temperature gradient in the second regions directly starts from the spatially constant temperature in the first region, i. e. without any significant temperature jump between the first and second regions. Further, there will only be a small curved temperature course along the optical axis, which, for physical reasons, cannot be omitted completely. The first temperature gradient provides for an additional degree of freedom in adapting the optical properties of the continuous body in the resonator cavity to the light of the two different wavelengths. This single additional degree of freedom may not be sufficient to achieve resonance of the light of both of the two different wavelengths in the resonator cavity if the length of the resonator is not controlled or the pump laser frequency is not tuned to resonance.

A further degree of freedom in adapting the optical properties of the continuous body may be provided in that a second temperature gradient is adjusted in a third region of the continuous body. The third region preferably neighbors the first region on the second side of the first region that faces away from the first side of the first region. The third region also extends over at least 10 % of the total length of the continuous body; and the second temperature gradient will also be selected such as to achieve resonance of the light of the two different wavelengths in the resonator cavity. The feature that the third region of the continuous body extends over at least 10 % of the total length of the continuous body has the same meaning as the corresponding feature of the second region of the continuous body.

The first region and the second region, or the first, second and third regions, respectively, may be the only regions of the continuous body along the optical axis. However, there may be at least one other region of the continuous body.

Typically, the spatially constant temperature adjusted in the first region of the continuous body will be constant in that a spatial and also a temporal temperature variation over the first region will be smaller than 0.5 K. Often, this temperature variation over the first region will be smaller than 0.1 K, and preferably, it will be smaller than 10 mK. Further, the spatially constant temperature adjusted in the first region of the continuous body will be in a range from 18 °C to 150 °C. Preferably, it will be in a range from 22 °C to 80 °C. However, it will be understood that the spatially constant temperature to be selected for phase-matching between the light of the two different wavelengths will depend on the nonlinear optical material in the first region and on the two different wavelengths.

The first temperature gradient adjusted in the second region is either positive or negative. Typically, the first temperature gradient adjusted in the second region will result in a temperature difference of at least 1 K over the second region. Further, the first temperature gradient adjusted in the second region will be at least 0.1 K/mm. Often, the first temperature gradient adjusted in the second region will have a value in a range from 0.5 K/mm to 10 K/mm, and preferably in a range from 1 K/mm to 4 K/mm. The same applies to the second temperature gradient adjusted in the third region of the continuous body. In any case, the temperature gradient to be selected for resonance of the light of the two different wavelengths in the resonator cavity depends on the optical material in the respective region of the respective temperature gradient, on the two different wavelengths, and on the length of the respective region of the continuous body along the optical axis.

Generally, the first or second temperature gradient may be any defined temperature gradient over the second or third region of the continuous body. However, most preferably, all adjusted temperature gradients are spatially constant temperature gradients resulting in a linear course of the temperature of the optical material in the respective region along the optical axis, and, thus, in a most defined effect on the optical properties of the continuous body in the resonator cavity. The constancy of the temperature gradients, at least essentially, ensures that the relevant optical properties of the optical material in the respective region of the continuous body uniformly vary over the extension of the respective region along the optical axis in a defined and controlled way. This is a big advantage with regard to achieving the desired resonance of the light of the two different wavelengths in the resonator cavity in a controlled way by adjusting the temperature gradients.

An optical resonator according to the present invention comprises a resonator cavity extending along an optical axis between at least two mirrors. The at least two mirrors are aligned to allow for a closed optical beam path that defines the optical axis. The simplest configuration of the at least two mirrors is a first mirror arranged at a first cavity end and a second mirror arranged at a second cavity end. The optical resonator according to the present invention further comprises a continuous body comprising a nonlinear optical material arranged in the resonator cavity and having a total length along the optical axis, a first temperature adjusting device configured for adjusting a spatially constant temperature in a first region of the continuous body, and a second temperature adjusting device configured for adjusting a first temperature gradient in a second region of the continuous body. The first region of the continuous body comprises the nonlinear optical material and extends over at least 20 % of the total length of the continuous body along the optical axis. The second region neighbors the first region on a first side of the first region and extends over at least 10 % of the total length of the continuous body along the optical axis. The continuous body may be a homogenous continuous body completely consisting of the nonlinear optical material. At least, the continuous body comprises the nonlinear optical material in its first region.

Additionally, the optical resonator according to the present invention may comprise a third temperature adjusting device configured for adjusting a second temperature gradient in a third region of the continuous body. Preferably, the third region of the continuous body neighbors the first region on a second side of the first region that faces away from the first side of the first region. Same as the second region, the third region extends over at least 10 % of the total length of the continuous body along the optical axis.

The meaning of these features and other advantageous features of the optical resonator according to the present may be derived from the above description of the method according to the present invention.

Further, the at least two mirrors at the first and second ends of the resonator cavity may be concave mirrors, i.e. have a concave curvature of their reflecting surfaces at the cavity ends, and they may be configured for focusing light coming out of a subregion of the first region of the continuous body back into that subregion. At least one or even both of the at least two mirrors may be provided on an end face of the continuous body. Thus, the optical resonator according to the present invention may comprise a monolithic construction of the resonator cavity including the continuous body comprising the nonlinear optical material, and of the at least two mirrors.

Each temperature adjusting device of the optical resonator according to the present invention may comprise at least one temperature sensor, at least one of a heating element and a thermo-electric-cooler which may also be used as a heating element, like for example a Peltier element, and a temperature controller operating the heating element and/or the Peltier element depending on a temperature sensed by the temperature sensor and a target temperature or target temperature difference. Alternatively, sensing of the involved light fields can be used to control some of the heating elements or thermo-electric-coolers, i.e., the Pound-Drever-Hall method can be used to sense whether a laser field is resonant in the resonator.

In an embodiment, the first temperature adjusting device may further comprise a temperature equalizer made of a high thermal conductivity material and continuously contacting the continuous body along the optical axis over the first region. The high thermal conductivity material comprises a high specific thermal conductivity much higher than a specific thermal conductivity of the nonlinear optical material. The temperature equalizer quickly compensates any difference in temperature within the first region by a heat flow through the high thermal conductivity material that is actually driven by the difference in temperature. The high thermal conductivity material may, by more than 50 % by weight, i.e. essentially, consist of copper. Copper is well-known for having a high thermal conductivity.

In the same embodiment, the second temperature adjusting device may comprise a limited heat flow channel made of a medium thermal conductivity material and continuously contacting the continuous body along the optical axis over the second region. A medium specific thermal conductivity of the medium thermal conductivity material is lower than the high specific thermal conductivity of the high thermal conductivity material, but it may still be higher than the specific thermal conductivity of the nonlinear optical material. Further, the cross section and, thus, the effective thermal conductivity of the limited heat flow channel may be constant over the length of the limited heat flow channel along the optical axis. Thus, the limited heat flow channel will provide for a constant primary temperature gradient along the heat flow channel. This primary temperature gradient will then be transferred to the continuous body and result in the desired first temperature gradient in the second region of the continuous body. For example, the medium thermal conductivity material may consist of stainless steel known to have a rather low thermal conductivity for a metal but still a high thermal conductivity as compared to a nonlinear optical material.

The medium heat flow channel described here is a solid body. In a particular embodiment, the medium heat flow channel directly contacts the temperature equalizer, and the medium heat flow channel and the temperature equalizer have coplanar surfaces which directly or via an additional thin thermal conduction layer of a high thermal conductivity contact the continuous body. The coplanar surfaces may be commonly fabricated after joining the high thermal conductivity material of the temperature equalizer and the medium thermal conductivity material of the limited heat flow channel. In this way, a high flatness of the surface supporting the continuous body can be achieved. This reduces the risk of applying mechanical stress to the nonlinear optical material placed on this surface.

If, in the present description, up to this paragraph and following to this paragraph, regions of the continuous body are numbered as first region, second region and third region, respectively, or temperature gradients are numbered as first temperature gradient and second temperature gradient, respectively, the numbering only serves for distinguishing the respective regions and temperature gradients, respectively. The numbering as such does not include any additional information on the various regions of the continuous body and the various temperature gradients.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if a temperature sensor is mentioned, this is to be understood such that there is exactly one temperature sensor or there are two temperature sensors or more temperature sensors. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

In the following, the invention is further explained and described with reference to preferred exemplary embodiments illustrated in the drawings.
- **Fig. 1**: is a side view of a first embodiment of an optical resonator according to the present invention.
- **Fig. 2**: shows details of the optical resonator of Fig. 1 and a temperature distribution over a continuous body made of a nonlinear optical material.
- **Fig. 3**: is a side view of a further embodiment of the optical resonator according to the present invention; and
- **Fig. 4**: is a side view of an even further embodiment of the optical resonator according to the present invention.

### DESCRIPTION OF THE DRAWINGS

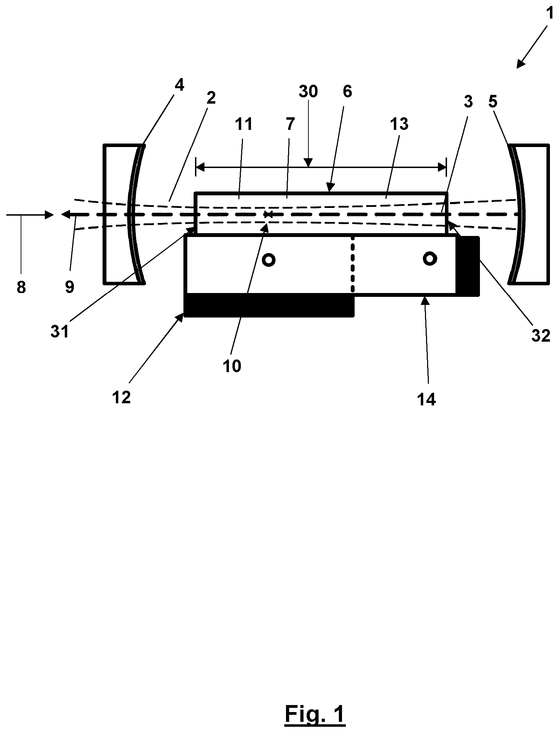

The optical resonator 1 depicted in **Fig. 1** comprises a resonator cavity 2 that extends along an optical axis 3 and that is here delimited by two mirrors 4 and 5. The mirror 4 is a partially transmitting coupling mirror for coupling light into and coupling light out of the cavity 2. The mirror 5 is a highly reflective mirror. Both mirrors 4 and 5 are concave. A continuous body 6 comprising a nonlinear optical material 7 is arranged in the resonator cavity 2 on the optical axis 3. The nonlinear optical material 7 may, for example, consist of KTiOPO₄, also designated as potassium titanyl phosphate (KTP), and the continuous body 6 may be a nonlinear crystal made of periodically poled KTP. The nonlinear optical material 7 serves for converting pump light 8 coupled into the resonator cavity 2 to light 9 of a different wavelength which can be coupled out of the resonator cavity 2. The concave mirrors 4 and 5 form coinciding beam waists 10 of the light 8, 9 of both different wavelengths within the continuous body 6. Here, in the subregion of the beam waists, the frequency conversion shall take place but requires a phase-matching of the light 8, 9 of the two different wavelengths propagating along the optical axis 3 back and forth in the resonator cavity 2 between the mirrors 4 and 5. This phase-matching is achieved by adjusting a temperature of the nonlinear optical material 7 in a first region 11 of the continuous body 6 by means of a first temperature adjusting device 12. In a neighboring second region 13 of the continuous body 6, a spatially constant temperature gradient along the optical axis 3 is adjusted by means of a second temperature adjusting device 14. The spatially constant temperature gradient is selected such as to tune the optical length of the resonator cavity 2 for resonance of the light 8, 9 of both different wavelengths.

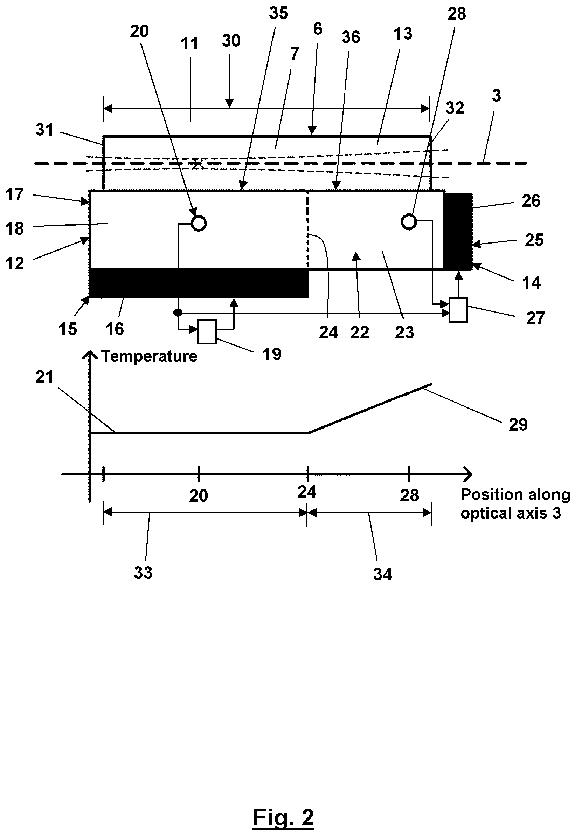

Details of the first temperature adjusting device 12 and the second temperature adjusting device 14 will now be discussed with reference to **Fig. 2** showing these devices 12 and 14 attached to the continuous body 6 at the top, and a temperature distribution in the continuous body 6 along the optical axis 3 at the bottom. The first temperature adjusting device 12 comprises a heat sink and source 15, which is, here, implemented as a thermo-electric cooler 16 attached to a temperature equalizer 17. The temperature equalizer 17 is a solid body made of a high thermal conductivity material 18, like for example copper. The thermo-electric cooler is controlled by a temperature controller 19, for example a PID controller, in response to a signal of a temperature sensor 20 located in the temperature equalizer 18 to adjust the temperature of the temperature equalizer 17 to a desired or target temperature. This temperature, which is constant over the extension of the temperature equalizer 17 along the optical axis 3 results in a spatially constant temperature 21 in the continuous body 6 over the extension of its first region 11 along the optical axis 3.

The second temperature adjusting device 14 comprises a limited heat flow channel 22. The limited heat flow channel 22 is a solid body made of medium thermal conductivity material 23, like for example stainless steel. The limited heat flow channel 22 directly contacts the temperature equalizer 17 at an interface 24, and, with a constant cross section perpendicular to the optical axis 3 extends over the second region 13 of the continuous body 6 and beyond up to a heat sink and source 25 which is a further thermo-electric cooler 26, here. The heat sink and source 25 is operated by a temperature controller 27, for example a further PID controller, in response to the signal of the temperature sensor 20 in the temperature equalizer 18 and the signal of a further temperature sensor 28 which is arranged in the limited heat flow channel 22 at a position closer to the heat sink than source 25 than to the interface 24. The temperature controller 27 adjusts a desired temperature difference. Adjusting a higher temperature at the temperature sensor 28 than at the temperature sensor 20, results in a constant positive temperature gradient in the limited heat flow channel 22. The spatially constant temperature gradient 29 resulting in the second region 13 of the continuous body 6 is depicted at the bottom of Fig. 2.

The course of the temperature over the second region 13 begins with the spatially constant temperature 21 in the first region 11. However, there is no absolutely sharp kink between the spatially constant temperature 21 and the second region 13 of the temperature gradient 29 but a slightly curved course of the temperature at the interface 24. Fig. 2 also emphasizes that the first and second regions 11 and 13 are essential portions of the continuous body 6 which has an overall or total length 30 along the optical axis 3 between its end faces 31 and 32. In the embodiment depicted, a length 33 of the first portion 11 along the optical axis 3 is about 60 % of the total length 30, and a length 34 of the second portion 13 is about 40 % of the total length 30 of the continuous body 6.

Surfaces 35 and 36 of the temperature equalizer 17 and the limited heat flow channel 22, which support the first and second regions 11, 13 of the continuous body 6 are coplanar, and they have been machined together after attaching the medium thermal conductivity material 23 to the high thermal conductivity material 18 at the interface 24. This also applies to the further embodiments of the resonator 1 depicted in the other drawings.

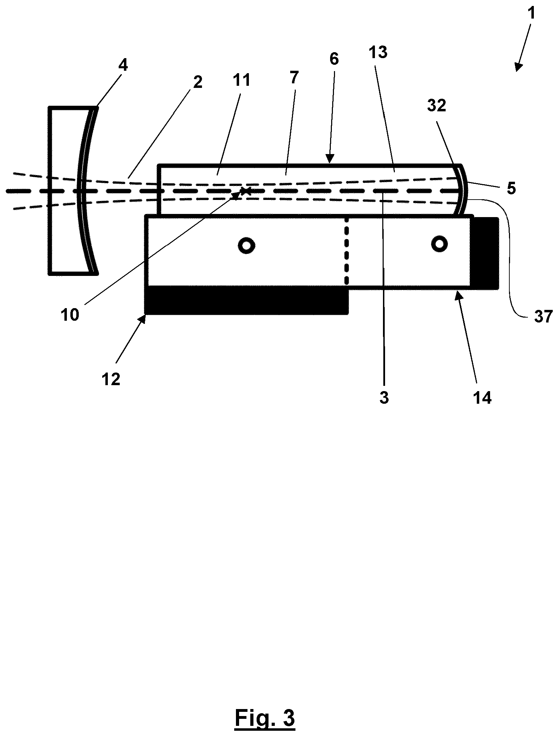

The resonator 1 depicted in **Fig. 3** differs from that one shown in Figs. 1 and 2 in that the high reflective mirror 5 is directly provided at the end face 33 of the continuous body 6 as a highly reflective coating 37 of this end face 33.

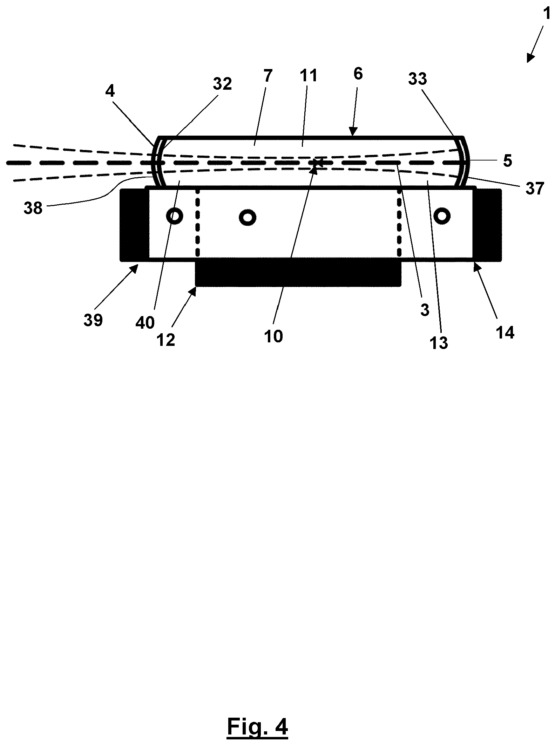

The optical resonator 1 depicted in **Fig. 4** differs from that one shown in Fig. 3 in that the coupling mirror 4 is directly provided on the other end face 32 of the continuous body 6 as a partially transmitting coating 38 of that end face 32, and that a third temperature adjusting device 39 is provided at a side of the first temperature adjusting device 12 opposite to the second temperature adjusting device 14. The third temperature gradient adjusting device 39 is of an equal construction as the first temperature gradient adjusting device 14, and it is associated with a third region of the continuous body 6 extending along the optical axis 3. However, the extension of this third portion 40 along the optical axis 3 is shorter than the extension of the second portion 13 along the optical axis 3, here. A second spatially constant temperature gradient adjusted in the third region 40 by means of the third temperature adjusting device 39 provides for an additional degree of freedom in adapting the optical properties of the continuous body 6 allowing for achieving phase-matching and double-resonance of the light 8, 9 of the different wavelengths in the resonator cavity at the same time. The distance of the mirrors 4 and 5 at the cavity ends of the resonator cavity 2 is fixed to the total length 30 of the continuous body 6 along the optical axis 3 between its end faces 32 and 33, here, but this total length 30 is variable by, for example, setting the spatially constant temperature gradient in the third region and utilizing the resulting thermal expansion of the continuous body 6 along the optical axis 3.

The present invention is also suitable for more complex resonator cavity schemes like bow-tie cavities or different coupling mirrors for the light of the different wavelengths. For example, such a more complex resonator scheme may be used to generate vacuum squeezed states of light 9 a 1,064 nm wavelength by injecting a laser beam as the pump light 8 of 532 nm within the resonator 1.

### LIST OF REFERENCE NUMERALS

- 1: optical resonator
- 2: resonator cavity
- 3: optical axis
- 4: mirror
- 5: mirror
- 6: continuous body
- 7: nonlinear optical material
- 8: light
- 9: light
- 10: beam waists
- 11: first region
- 12: first temperature adjusting device
- 13: second region
- 14: second temperature adjusting device
- 15: heat sink and source
- 16: thermo-electric cooler
- 17: temperature equalizer
- 18: high thermal conductivity material
- 19: temperature controller
- 20: temperature sensor
- 21: spatially constant temperature
- 22: limited heat flow channel
- 23: medium thermal conductivity material
- 24: interface
- 25: heat sink and source
- 26: thermo-electric cooler
- 27: temperature controller
- 28: temperature sensor
- 29: temperature gradient
- 30: total length
- 31: end face
- 32: end face
- 33: length
- 34: length
- 35: surface
- 36: surface
- 37: highly reflective coating
- 38: partially transmitting coating
- 39: third temperature gradient adjusting device
- 40: third region

## Claims

1. A method of adapting optical properties of a continuous body (6) arranged in a resonator cavity (2) and comprising a nonlinear optical material to light (8, 9) of two different wavelengths passing through the continuous body (6) along an optical axis (3), the continuous body (6) having a total length (30) along the optical axis (3), the method comprising
- adjusting a spatially constant temperature (21) in a first region (11) of the continuous body (6), the first region (11) comprising the nonlinear optical material (7) and extending over at least 20 % of the total length (30) of the continuous body (6), the spatially constant temperature (21) being selected such as to achieve phase-matching between the light (8, 9) of the two different wavelengths in the first region (11),
**characterized by**
- adjusting a first temperature gradient (29) along the optical axis (3) in a second region (13) of the continuous body (6), the first temperature gradient (29) directly starting from the spatially constant temperature (21) in the first region (11), and the second region (13) neighboring the first region (11) on a first side of the first region (11) and extending over at least 10 % of the total length (30) of the continuous body (6), the first temperature gradient (29) providing for an additional degree of freedom in adapting the optical properties of the continuous body (6) in the resonator cavity (2) to the light (8, 9) of the two different wavelengths.

2. The method of claim 1, **wherein** the first temperature gradient (29) is selected such as to achieve resonance of the light (8, 9) of both of the two different wavelengths in the resonator cavity (2).

3. The method of claim 2, **further comprising** adjusting a second temperature gradient along the optical axis (3) in a third region (40) of the continuous body (6), the third region (40) neighboring the first region (11) on a second side of the first region (11) that faces away from the first side of the first region (11) and extending over at least 20 % of the total length (30) of the continuous body (6), wherein the second temperature gradient is also selected such as to achieve resonance of the light (8, 9) of the two different wavelengths in the cavity (2).

4. The method of any of the preceding claims, **wherein** the spatially constant temperature (21) is in a range from 18 °C to 150 °C, and preferably in a range from 22 °C to 80 °C.

5. The method of any of the preceding claims, **wherein** a value of the first temperature gradient (29) is in a range from 0.5 K/mm to 10 K/mm, and preferably in a range from 1 K/mm to 4 K/mm.

6. The method of any of the preceding claims, **wherein** the first temperature gradient (29) is a spatially constant temperature gradient.

7. An optical resonator comprising
- a resonator cavity (2) extending along an optical axis (3) between at least two mirrors (4, 5),
- a continuous body (6) comprising a nonlinear optical material (7) arranged in the resonator cavity (2) and having a total length (30) along the optical axis (3), and
- a first temperature adjusting device (12) configured for adjusting a spatially constant temperature (21) in a first region (11) of the continuous body (6), the first region (11) comprising the nonlinear optical material (7) and extending over at least 20 % of the total length (30) of the continuous body (6) along the optical axis (3),
**characterized by**
- a second temperature adjusting device (14) configured for adjusting a first temperature gradient (29) along the optical axis (3) in a second region (13) of the continuous body (6), the first temperature gradient (29) directly starting from the spatially constant temperature (21) in the first region (11), and the second region (13) neighboring the first region (11) on a first side of the first region (11) and extending over at least 10 % of the total length (30) of the continuous body (6) along the optical axis (3), the first temperature gradient (29) providing for an additional degree of freedom in adapting the optical properties of the continuous body (6) in the resonator cavity (2) to the light (8, 9) of the two different wavelengths.

8. The optical resonator of claim 7, **wherein** the continuous body (6) is a homogenous continuous body (6) consisting of the nonlinear optical material (7).

9. The optical resonator of claim 7 or 8, **further comprising** a third temperature adjusting device (39) configured for adjusting a second temperature gradient along the optical axis (3) in a third region (40) of the continuous body (6), the third region (40) neighboring the first region (11) on a second side of the first region (11) that faces away from the first side of the first region (11) and extending over at least 10 % of the total length (30) of the continuous body (6) along the optical axis (3).

10. The optical resonator of any of the claims 7 to 9, **wherein** the at least two mirrors (4, 5) are concave mirrors configured for focusing light coming out of a subregion of the first region (11) of the continuous body (6) back into that subregion.

11. The optical resonator of any of the claims 7 to 10, **wherein** at least one of the at least two mirrors (4, 5) is provided on an end face (31, 32) of the continuous body (6).

12. The optical resonator of any of the claims 7 to 11, **wherein** each temperature adjusting device (12, 14, 39) comprises a temperature sensor (20, 28), at least one of a heating element and a thermo-electric cooler and a temperature controller (19, 27).

13. The optical resonator of any of the claims 7 to 12, **wherein** the first temperature adjusting (12) device comprises a temperature equalizer (17) made of a high thermal conductivity material (18) and continuously contacting the continuous body (6) along the optical axis (3) over the first region (11), wherein the high thermal conductivity material (18) optionally consists by more than 50 % by weight of copper.

14. The optical resonator of claim 13, **wherein** the second temperature adjusting device (14) comprises a limited heat flow channel (22) made of a medium thermal conductivity material (23) and continuously contacting the continuous body (6) along the optical axis (3) over the second region (13), wherein a medium thermal conductivity of the medium thermal conductivity material (23) is higher than a thermal conductivity of the nonlinear optical material (7) but lower than a high thermal conductivity of the high thermal conductivity material (18) , wherein the medium thermal conductivity material (23) optionally consists by more than 50 % by weight of stainless steel.

15. The optical resonator of claim 14, **wherein** the medium heat flow channel directly (22) contacts the temperature equalizer (17), and the medium heat flow channel (22) and the temperature equalizer (18) have coplanar surfaces (35, 36) contacting the continuous body (6).

## Patentansprüche

1. Verfahren zum Anpassen optischer Eigenschaften eines in einem Resonatorhohlraum (2) angeordneten und ein nichtlineares optisches Material umfassenden durchgehenden Körpers (6) an Licht (8, 9) zweier unterschiedlicher Wellenlängen, das den durchgehenden Körper (6) entlang einer optischen Achse (3) durchläuft, wobei der durchgehende Körper (6) entlang der optischen Achse (3) eine Gesamtlänge (30) aufweist, wobei das Verfahren umfasst:
- Einstellen einer räumlich konstanten Temperatur (21) in einem ersten Bereich (11) des durchgehenden Körpers (6), wobei der erste Bereich (11) das nichtlineare optische Material (7) umfasst und sich über mindestens 20 % der Gesamtlänge (30) des durchgehenden Körpers (6) erstreckt, wobei die räumlich konstante Temperatur (21) derart gewählt wird, dass eine Phasenanpassung zwischen dem Licht (8, 9) der beiden unterschiedlichen Wellenlängen in dem ersten Bereich (11) erreicht wird,
**gekennzeichnet durch**
- Einstellen eines ersten Temperaturgradienten (29) entlang der optischen Achse (3) in einem zweiten Bereich (13) des durchgehenden Körpers (6), wobei der erste Temperaturgradient (29) unmittelbar von der räumlich konstanten Temperatur (21) in dem ersten Bereich (11) ausgeht und wobei der zweite Bereich (13) auf einer ersten Seite des ersten Bereichs (11) an den ersten Bereich (11) angrenzt und sich über mindestens 10 % der Gesamtlänge (30) des durchgehenden Körpers (6) erstreckt, wobei der erste Temperaturgradient (29) einen zusätzlichen Freiheitsgrad bei der Anpassung der optischen Eigenschaften des durchgehenden Körpers (6) in dem Resonatorhohlraum (2) an das Licht (8, 9) der beiden unterschiedlichen Wellenlängen bereitstellt.

2. Verfahren nach Anspruch 1, **wobei** der erste Temperaturgradient (29) derart gewählt wird, dass eine Resonanz des Lichts (8, 9) beider unterschiedlicher Wellenlängen in dem Resonatorhohlraum (2) erreicht wird.

3. Verfahren nach Anspruch 2, **ferner umfassend** das Einstellen eines zweiten Temperaturgradienten entlang der optischen Achse (3) in einem dritten Bereich (40) des durchgehenden Körpers (6), wobei der dritte Bereich (40) auf einer zweiten Seite des ersten Bereichs (11), die von der ersten Seite des ersten Bereichs (11) abgewandt ist, an den ersten Bereich (11) angrenzt und sich über mindestens 20 % der Gesamtlänge (30) des durchgehenden Körpers (6) erstreckt, wobei der zweite Temperaturgradient ebenfalls derart gewählt wird, dass eine Resonanz des Lichts (8, 9) der beiden unterschiedlichen Wellenlängen in dem Resonatorhohlraum (2) erreicht wird.

4. Verfahren nach einem der vorhergehenden Ansprüche, **wobei** die räumlich konstante Temperatur (21) in einem Bereich von 18 °C bis 150 °C und vorzugsweise in einem Bereich von 22 °C bis 80 °C liegt..

5. Verfahren nach einem der vorhergehenden Ansprüche, **wobei** ein Wert des ersten Temperaturgradienten (29) in einem Bereich von 0,5 K/mm bis 10 K/mm und vorzugsweise in einem Bereich von 1 K/mm bis 4 K/mm liegt.

6. Verfahren nach einem der vorhergehenden Ansprüche, **wobei** der erste Temperaturgradient (29) ein räumlich konstanter Temperaturgradient ist.

7. Optischer Resonator mit
- einem Resonatorhohlraum (2), der sich entlang einer optischen Achse (3) zwischen mindestens zwei Spiegeln (4, 5) erstreckt,
- einem durchgehenden Körper (6), der ein nichtlineares optisches Material (7) umfasst, in dem Resonatorhohlraum (2) angeordnet ist und entlang der optischen Achse (3) eine Gesamtlänge (30) aufweist, und
- einer ersten Temperatureinstelleinrichtung (12), die zum Einstellen einer räumlich konstanten Temperatur (21) in einem ersten Bereich (11) des durchgehenden Körpers (6) ausgebildet ist, wobei der erste Bereich (11) das nichtlineare optische Material (7) umfasst und sich über mindestens 20 % der Gesamtlänge (30) des durchgehenden Körpers (6) entlang der optischen Achse (3) erstreckt,
**gekennzeichnet durch**
- eine zweite Temperatureinstelleinrichtung (14), die zum Einstellen eines ersten Temperaturgradienten (29) entlang der optischen Achse (3) in einem zweiten Bereich (13) des durchgehenden Körpers (6) ausgebildet ist, wobei der erste Temperaturgradient (29) unmittelbar von der räumlich konstanten Temperatur (21) in dem ersten Bereich (11) ausgeht und wobei der zweite Bereich (13) auf einer ersten Seite des ersten Bereichs (11) an den ersten Bereich (11) angrenzt und sich über mindestens 10 % der Gesamtlänge (30) des durchgehenden Körpers (6) entlang der optischen Achse (3) erstreckt, wobei der erste Temperaturgradient (29) einen zusätzlichen Freiheitsgrad bei der Anpassung der optischen Eigenschaften des durchgehenden Körpers (6) in dem Resonatorhohlraum (2) an das Licht (8, 9) der beiden unterschiedlichen Wellenlängen bereitstellt.

8. Optischer Resonator nach Anspruch 7, **wobei** der durchgehende Körper (6) ein homogener durchgehender Körper (6) ist, der aus dem nichtlinearen optischen Material (7) besteht.

9. Optischer Resonator nach Anspruch 7 oder 8, **ferner umfassend** eine dritte Temperatureinstelleinrichtung (39), die zum Einstellen eines zweiten Temperaturgradienten entlang der optischen Achse (3) in einem dritten Bereich (40) des durchgehenden Körpers (6) ausgebildet ist, wobei der dritte Bereich (40) auf einer zweiten Seite des ersten Bereichs (11), die von der ersten Seite des ersten Bereichs (11) abgewandt ist, an den ersten Bereich (11) angrenzt und sich über mindestens 10 % der Gesamtlänge (30) des durchgehenden Körpers (6) entlang der optischen Achse (3) erstreckt.

10. Optischer Resonator nach einem der Ansprüche 7 bis 9, **wobei** die mindestens zwei Spiegel (4, 5) konkave Spiegel sind, die dazu ausgebildet sind, aus einem Teilbereich des ersten Bereichs (11) des durchgehenden Körpers (6) austretendes Licht zurück in diesen Teilbereich zu fokussieren.

11. Optischer Resonator nach einem der Ansprüche 7 bis 10, **wobei** mindestens einer der mindestens zwei Spiegel (4, 5) auf einer Stirnfläche (31, 32) des durchgehenden Körpers (6) vorgesehen ist.

12. Optischer Resonator nach einem der Ansprüche 7 bis 11, **wobei** jede Temperatureinstelleinrichtung (12, 14, 39) einen Temperatursensor (20, 28), mindestens ein Heizelement und/oder einen thermoelektrischen Kühler sowie einen Temperaturregler (19, 27) umfasst.

13. Optischer Resonator nach einem der Ansprüche 7 bis 12, **wobei** die erste Temperatureinstelleinrichtung (12) einen Temperaturausgleicher (17) umfasst, der aus einem Material (18) mit hoher Wärmeleitfähigkeit hergestellt ist und den durchgehenden Körper (6) entlang der optischen Achse (3) über den ersten Bereich (11) hinweg durchgehend kontaktiert, wobei das Material (18) mit hoher Wärmeleitfähigkeit optional zu mehr als 50 Gew.-% aus Kupfer besteht.

14. Optischer Resonator nach Anspruch 13, **wobei** die zweite Temperatureinstelleinrichtung (14) einen Kanal (22) von begrenztem Wärmefluss umfasst, der aus einem Material (23) mit mittlerer Wärmeleitfähigkeit hergestellt ist und den durchgehenden Körper (6) entlang der optischen Achse (3) über den zweiten Bereich (13) hinweg durchgehend kontaktiert, wobei eine mittlere Wärmeleitfähigkeit des Materials (23) mit mittlerer Wärmeleitfähigkeit höher als eine Wärmeleitfähigkeit des nichtlinearen optischen Materials (7), jedoch niedriger als eine hohe Wärmeleitfähigkeit des Materials (18) mit hoher Wärmeleitfähigkeit ist, wobei das Material (23) mit mittlerer Wärmeleitfähigkeit optional zu mehr als 50 Gew.-% aus Edelstahl besteht.

15. Optischer Resonator nach Anspruch 14, **wobei** der Kanal (22) von mittlerem Wärmefluss den Temperaturausgleicher (17) unmittelbar kontaktiert und der Kanal (22) von mittlerem Wärmefluss und der Temperaturausgleicher (17) koplanare Oberflächen (35, 36) aufweisen, die den durchgehenden Körper (6) kontaktieren.

## Revendications

1. Procédé d'adaptation des propriétés optiques d'un corps continu (6) qui est disposé dans une cavité résonante (2) et comprenant un matériau optique non linéaire à la lumière (8, 9) de deux longueurs d'onde différentes traversant le corps continu (6) le long d'un axe optique (3), le corps continu (6) ayant une longueur totale (30) le long de l'axe optique (3), le procédé comprenant
- le réglage d'une température spatialement constante (21) dans une première région (11) du corps continu (6), la première région (11) comprenant le matériau optique non linéaire (7) et s'étendant sur au moins 20 % de la longueur totale (30) du corps continu (6), la température spatialement constante (21) étant sélectionnée de manière à obtenir l'accord de phase entre la lumière (8, 9) des deux longueurs d'onde différentes dans la première région (11),
**caractérisé en ce qu'il comprend**
- le réglage d'un premier gradient de température (29) le long de l'axe optique (3) dans une deuxième région (13) du corps continu (6), le premier gradient de température (29) partant directement de la température spatialement constante (21) dans la première région (11), et la deuxième région (13) étant adjacente à la première région (11) sur un premier côté de la première région (11) et s'étendant sur au moins 10 % de la longueur totale (30) du corps continu (6), le premier gradient de température (29) fournissant un degré de liberté supplémentaire pour l'adaptation des propriétés optiques du corps continu (6) dans la cavité résonante (2) à la lumière (8, 9) des deux longueurs d'onde différentes.

2. Procédé selon la revendication 1, **dans lequel** le premier gradient de température (29) est sélectionné de manière à obtenir la résonance de la lumière (8, 9) des deux longueurs d'onde différentes dans la cavité résonante (2).

3. Procédé selon la revendication 2, **comprenant en outre** le réglage d'un second gradient de température le long de l'axe optique (3) dans une troisième région (40) du corps continu (6), la troisième région (40) étant adjacente à la première région (11) sur un second côté de la première région (11) qui fait face à l'opposé du premier côté de la première région (11) et s'étendant sur au moins 20 % de la longueur totale (30) du corps continu (6), lequel second gradient de température est également sélectionné de manière à obtenir la résonance de la lumière (8, 9) des deux longueurs d'onde différentes dans la cavité (2).

4. Procédé selon l'une quelconque des revendications précédentes, **dans lequel** la température spatialement constante (21) est dans une plage de 18 °C à 150 °C, et de préférence dans une plage de 22 °C à 80 °C.

5. Procédé selon l'une quelconque des revendications précédentes, **dans lequel** une valeur du premier gradient de température (29) est dans une plage de 0,5 K/mm à 10 K/mm, et de préférence dans une plage de 1 K/mm à 4 K/mm.

6. Procédé selon l'une quelconque des revendications précédentes, **dans lequel** le premier gradient de température (29) est un gradient de température spatialement constant.

7. Résonateur optique comprenant
- une cavité résonante (2) qui s'étend le long d'un axe optique (3) entre au moins deux miroirs (4, 5),
- un corps continu (6) comprenant un matériau optique non linéaire (7) qui est disposé dans la cavité résonante (2) et ayant une longueur totale (30) le long de l'axe optique (3), et
- un premier dispositif de réglage de température (12) configuré pour régler une température spatialement constante (21) dans une première région (11) du corps continu (6), la première région (11) comprenant le matériau optique non linéaire (7) et s'étendant sur au moins 20 % de la longueur totale (30) du corps continu (6) le long de l'axe optique (3),
**caractérisé en ce qu'il comprend**
- un second dispositif de réglage de température (14) configuré pour régler un premier gradient de température (29) le long de l'axe optique (3) dans une deuxième région (13) du corps continu (6), le premier gradient de température (29) partant directement de la température spatialement constante (21) dans la première région (11), et la deuxième région (13) étant adjacente à la première région (11) sur un premier côté de la première région (11) et s'étendant sur au moins 10 % de la longueur totale (30) du corps continu (6) le long de l'axe optique (3), le premier gradient de température (29) fournissant un degré de liberté supplémentaire pour l'adaptation des propriétés optiques du corps continu (6) dans la cavité résonante (2) à la lumière (8, 9) des deux longueurs d'onde différentes.

8. Résonateur optique selon la revendication 7, **dans lequel** le corps continu (6) est un corps continu homogène (6) constitué du matériau optique non linéaire (7).

9. Résonateur optique selon la revendication 7 ou 8, **comprenant en outre** un troisième dispositif de réglage de température (39) configuré pour régler un second gradient de température le long de l'axe optique (3) dans une troisième région (40) du corps continu (6), la troisième région (40) étant adjacente à la première région (11) sur un second côté de la première région (11) qui fait face à l'opposé du premier côté de la première région (11) et s'étendant sur au moins 10 % de la longueur totale (30) du corps continu (6) le long de l'axe optique (3).

10. Résonateur optique selon l'une quelconque des revendications 7 à 9, **dans lequel** les au moins deux miroirs (4, 5) sont des miroirs concaves configurés pour focaliser la lumière sortant d'une sous-région de la première région (11) du corps continu (6) dans cette sous-région.

11. Résonateur optique selon l'une quelconque des revendications 7 à 10, **dans lequel** au moins l'un des au moins deux miroirs (4, 5) est disposé sur une face d'extrémité (31, 32) du corps continu (6).

12. Résonateur optique selon l'une quelconque des revendications 7 à 11, **dans lequel** chaque dispositif de réglage de température (12, 14, 39) comprend un capteur de température (20, 28), au moins un élément chauffant et/ou un refroidisseur thermoélectrique et un régulateur de température (19, 27).

13. Résonateur optique selon l'une quelconque des revendications 7 à 12, **dans lequel** le premier dispositif de réglage de température (12) comprend un égaliseur de température (17) constitué d'un matériau à haute conductivité thermique (18) et en contact continu avec le corps continu (6) le long de l'axe optique (3) sur la première région (11), le matériau à haute conductivité thermique (18) consistant éventuellement à plus de 50 % en poids de cuivre.

14. Résonateur optique selon la revendication 13, **dans lequel** le second dispositif de réglage de température (14) comprend un canal de flux thermique limité (22) constitué d'un matériau à conductivité thermique moyenne (23) et en contact continu avec le corps continu (6) le long de l'axe optique (3) sur la deuxième région (13), une conductivité thermique moyenne du matériau à conductivité thermique moyenne (23) étant supérieure à une conductivité thermique du matériau optique non linéaire (7) mais inférieure à une conductivité thermique élevée du matériau à haute conductivité thermique (18), le matériau à conductivité thermique moyenne (23) consistant éventuellement à plus de 50 % en poids d'acier inoxydable.

15. Résonateur optique selon la revendication 14, **dans lequel** le canal de flux thermique moyen (22) est en contact direct avec l'égaliseur de température (17), et le canal de flux thermique moyen (22) et l'égaliseur de température (18) présentent des surfaces coplanaires (35, 36) en contact avec le corps continu (6).
